# EUROPÄISCHE PATENTSCHRIFT

(11) **EP 2 122 918 B1**
(45) Veröffentlichungstag und Bekanntmachung des Hinweises auf die Patenterteilung: **22.01.2014**
(21) Anmeldenummer: 08708216.0
(22) Anmeldetag: 25.01.2008
(51) Int. Cl.: H04W 12/06

(54) **VERFAHREN UND ANORDNUNG ZUM BEREITSTELLEN EINES DRAHTLOSEN MESH-NETZWERKS**
METHOD AND ARRANGEMENT FOR PROVIDING A WIRELESS MESH NETWORK
PROCÉDÉ ET CONFIGURATION POUR LA PRÉPARATION D'UN RÉSEAU MAILLÉ SANS FIL

(30) Priorität: 14.02.2007 DE 102007007345
(43) Veröffentlichungstag der Anmeldung: 25.11.2009
(73) Patentinhaber: Unify GmbH & Co. KG, 81379 München (DE)
(72) Erfinder: FALK, Rainer, 85435 Erding (DE); KOHLMAYER, Florian, 82319 Starnberg (DE)
(74) Vertreter: Fritzsche, Thomas
(86) Internationale Anmeldenummer: PCT/EP2008/050891
(87) Internationale Veröffentlichungsnummer: WO 2008/098827

(56) Entgegenhaltungen:
- EP-A- 1 890 518
- US-A1- 2006 200 678
- TONY BRASKICH ET AL: "Efficient Mesh Security and Link Establishment" IEEE 802.11-06/1470R3, November 2006 (2006-11), Seiten 1-60, XP002480982
- WI-MESH ALLIANCE: "802.11 TGs MAC Enhancement Proposal" IEEE 802.11-05/575R4, WI-MESH ALLIANCE PROPOSAL TO 802.11 TASK GROUP "S", November 2005 (2005-11), Seiten 124-141, XP002480983

## Beschreibung

Die Erfindung betrifft ein Verfahren zum Bereitstellen eines drahtlosen Mesh-Netzwerks gemäß dem Oberbegriff des Anspruchs 1 sowie eine Anordnung zum Bereitstellen eines drahtlosen Mesh-Netzwerks gemäß dem Oberbegriff des Anspruchs 15.

Ein drahtloses Maschen- bzw. Mesh-Netzwerk ist ein vermaschtes Netz von als Knoten bezeichneten Endgeräten, welches beispielsweise in einem Wireless Local Area Network (WLAN) implementiert ist. Bei den Konten kann es sich sowohl um Infrastrukturknoten als auch um so genannte Endbenutzerknoten, wie beispielsweise einem Notebook oder PDA handeln.

Bei einem Mesh-Netzwerk kann ein mobiler Knoten Daten, die von einem anderen mobilen Knoten stammen, an einen weiteren mobilen Knoten weiterleiten oder an eine Basisstation übertragen. In einem Maschennetzwerk bzw. Mesh-Network können weite Distanzen überspannt werden, insbesondere in unebenem oder schwierigem Terrain. Maschennetze arbeiten zudem sehr zuverlässig, da jeder mobile Knoten mit einigen anderen Knoten verbunden ist. Wenn ein Knoten ausfällt, beispielsweise auf Grund eines Hardware-Defekts, suchen dessen Nachbarknoten eine alternative Datenübertragungsroute. Maschennetze bzw. Mesh-Networks können feste oder mobile Geräte mit einbeziehen.

Im Rahmen der Aufnahme eines neuen, in der Regel mobilen Knotens, wird eine Authentisierung durchgeführt. Diese Authentisierung erfolgt in der Regel unter Verwendung eines Authentisierungsservers "AAA-Server", wobei das Mesh-Netzwerk über eine Gateway-Komponente oder einem Verschlüsselungsmaterial liefernden so genannten Mesh-Key-Distributor mit einem Infrastrukturnetzwerk INFRASTRUCTURE NETWORK gekoppelt sein kann.

Zur Authentisierung von Knoten bzw. Rechnern wird im Allgemeinen das so genannte EAP (Extensible Authentication Protocol) Protokoll eingesetzt. Das EAP-Protokoll wird bei WLAN zur Absicherung des Netzwerkzugangs verwendet. Vielfältige konkrete Authentisierungsverfahren, sogenannte EAP-Methoden, können über das EAP-Protokoll transportiert werden, z.B. EAP-TLS, EAP-AKA, EAP-SIM, TTLS, PEAP-MSChapv2. Bei der Authentisierung wird ein kryptographischer Schlüssel bzw. Sitzungsschlüssel MSK, EMSK (MSK: Master-Session Key; EMSK: Extended Master Session Key) ermittelt, der nachfolgend zum Schutz der Datenkommunikation, beispielsweise bei der Link-Layer-Verschlüsselung verwendet wird. Die Authentisierung eines Teilnehmers erfolgt zwischen dem Teilnehmer (Supplicant) und einem Authentisierungsserver (AAA-Server). Bei erfolgreicher Authentisierung sendet der Authentisierungsserver das Ergebnis der Authentisierung und den aus der Authentisierung stammenden Sitzungsschlüssel MSK an einen Authenticator, beispielsweise ein WLAN-Access-Point. Die Kommunikation zwischen dem Zugangsknoten bzw. Access-Point und dem Authentisierungsserver erfolgt üblicherweise über das Radius- oder Diameter-Daten-Übertragungs-Protokoll. Dabei wird der Sitzungsschlüssel MSK als Datenattribut an den Zugangsknoten AP als Teil einer EAP-Success-Nachricht gesendet. Der übertragene Sitzungsschlüssel MSK wird anschließend in einem 802.11 4-Wege-Handshake 802.11 4WHS zwischen dem Teilnehmer und den Zugangsknoten gemäß dem 802.11 IEEE Standard eingesetzt.

Die Authentisierung auf Basis eines Authentisierungsservers AAA-Server unterscheidet also Rollen Supplicant und Authenticator, die im Detail die Folge hat, dass der Supplicant sich über den Authenticator gegenüber einem AAA-Server authentisiert, welcher das Resultat wiederum dem Authenticator mitteilt. Abhängig vom Ergebnis gewährt der Authenticator dem Supplicant dann Zugang zum Mesh-Netz oder nicht.

Während in einem üblichen Netzwerk, z.B. aus Basis von WLAN, bei einer Netzwerkanmeldung jeweils ein Client Zugang zu einem Netzwerk bekommen möchte, ist die Situation in einem Authenticator dem Supplicant dann Zugang zum Mesh-Netz oder nicht.

Während in einem üblichen Netzwerk, z.B. aus Basis von WLAN, bei einer Netzwerkanmeldung jeweils ein Client Zugang zu einem Netzwerk bekommen möchte, ist die Situation in einem Mesh-Netzwerk symmetrisch, da die Authentifikation zwischen zwei gleichartigen Mesh-Knoten erfolgt. So entsteht das Problem, dass festgelegt werden muss, welcher der beiden Knoten in der Authenticator-Rolle und welcher in der Supplicant-Rolle agiert.

Aus der US2006/0200678 ist eine so genannte "Role Arbitration" bekannt. Durchgeführt wird diese anhand der MAC-Adresse, anhand von Zufallswerten, die durch jeden Knoten gewählt werden, anhand eines "Hop Count" Vergleichs oder anhand von so genannten "Processing Capabilities".

Die WO2006/119281 offenbart allgemein eine "Role Arbitration" zwischen Mesh-Knoten, wobei die Rollenermittlung anhand von Zufallszahlen vorgenommen wird.

Der vorliegenden Erfindung liegt daher die Aufgabe zugrunde, ein verbessertes Verfahren sowie Anordnung zur Hereitstellung eines drahtlosen Mesh-Netzwerks anzugeben.

Diese Aufgabe wird ausgehend von dem Oberbegriff des Anspruchs 1 durch dessen kennzeichnende Merkmale sowie ausgehend vom Gattungsbegriff des Anspruchs 13 durch dessen kennzeichnende Merkmale gelöst.

Gemäß dem erfindungsgemäßen Verfahren zum Bereitstellen eines drahtlosen lokalen Netzwerks, bei dem stationäre Kommunikationseinrichtungen sowie mobile Kommunikationseinrichtungen nach Art eines Mesh als Subnetzwerk verbunden sind, welches insbesondere an ein Infrastrukturnetzwerk angeschlossen wird, und derart ausgestaltet ist, dass es mit zumindest einer, insbesondere im Infrastrukturnetzwerk angeordneten, eine Authentisierungsfunktion bereitstellende Kommunikationseinrichtung Authentisierungsnachrichten austauschen kann, wird bei einem Versuch des Aufbaus eines ersten Links von einer mit der die Authentisierungsfunktion bereitstellenden Kommunikationseinrichtung eine Verbindung aufweisenden ersten Kommunikationseinrichtung zu einer mit der die Authentisierungsfunktion bereitstellenden Kommunikationseinrichtung eine Verbindung aufweisenden zweiten Kommunikationseinrichtung eine im Rahmen einer Authentisierung zu vergebende Authenticator-Rolle derjenigen der ersten und zweiten Kommunikationseinrichtung zugeordnet, bei der zumindest eine zur Verbindung korrelierende Eigenschaft auf die Erfüllung eines Kriteriums geprüft wird.

Durch das erfindungsgemäße Verfahren wird die notwendige Rollenvergabe derart optimiert, dass Verbindungseigenschaften mit berücksichtigt werden, so dass das Netzwerk effizienter arbeiten kann. Außerdem wird hierdurch im Mittel auch eine bessere Verteilung der Ressourcen erzielt.

Vorteilhafter Weise wird dabei bei einer Weiterbildung der Erfindung seitens der ersten und zweiten Kommunikationseinrichtung eine Erfassung der zur Verbindung korrelierenden Größe erfolgen. Dies hat beispielsweise den Vorteil, dass der AAA-Server von solchen Ermittlungen entlastet ist und der erfindungsgemäße Grundeffekt, dass die Effizienz gesteigert und die Auslastung gleichmäßig verteilt wird, um ein weiteres Maß verbessert wird.

Vorzugsweise wird bei einer Weiterbildung als korrelierende Größe die Anzahl der Hops zu der die Authentisierungsfunktion bereitstellenden Kommunikationseinrichtung erfasst, da durch diesen Wert eine gute Abschätzung der für eine Nachrichtenübermittlung benötigten Zeit ermöglicht wird, wobei bevorzugt als Kriterium mindestens eine gemäß einem Routing-Protokoll, insbesondere einem Mesh-Routing Protokoll, ermittelbare Größe geprüft wird, insbesondere wird als Kriterium das Minimum der Anzahl von Hops geprüft, da somit diejenige Verbindung detektiert wird, die eine schnellere Abwicklung des Authentisierungsvorgangs verspricht.

Alternativ oder ergänzend gemäß einer weiteren vorteilhaften Ausgestaltung wird als korrelierende Größe eine physikalische Eigenschaft der Verbindung, insbesondere die Funkqualität, erfasst, wobei als Kriterium auf ein eine bessere Qualität indizierendes Maß geprüft wird. Durch diese Variante wird ebenfalls eine schnelle Abwicklung gewährleistet, da beispielsweise wegen Unterbrechungen der physikalischen Verbindung erforderliche Mehrfachübertragungen vermieden werden.

Eine weitere vorteilhafte Ergänzung bzw. alternative Weiterbildung ist gegeben, wenn als korrelierende Größe eine Auslastung der Verbindung zur die Authentisierungsfunktion bereitstellenden Kommunikationseinrichtung und/oder von die Verbindung zur die Authentisierungsfunktion bereitstellenden Kommunikationseinrichtung realisierender Kommunikationseinrichtungen erfasst wird, wobei als Kriterium ein Minimum der Auslastung geprüft wird. Diese Weiterbildung trägt ebenfalls wie die Vorgenannten neben der Effizienzsteigerung auch zur Gewährleistung einer schnelleren Abwicklung bei. Ferner sorgt diese Vorgehensweise dabei für eine bessere Verteilung der Last innerhalb des Netzes.

Alternativ, vor allem aber auch als Ergänzung wird gemäß einer Weiterbildung als korrelierende Größe die Art der Stromversorgung derjenigen Kommunikationseinrichtung erfasst, welche die Authentisierungsfunktion bereitstellt und/oder welche die Verbindung zu der die Authentisierungsfunktion bereitstellenden Kommunikationseinrichtung realisiert, wobei als Kriterium auf Netzstromversorgung geprüft wird. Dies verhindert eine mögliche Unterbrechung aufgrund mangelnder Energie zum Betreiben der betreffenden Knoten, so dass auch hier Zeitverluste vermieden und die Schnelligkeit der Abwicklung erhöht wird.

Wird als alternative Weiterbildung oder als Ergänzung zu vorstehenden Ausgestaltungen als korrelierende Größe die Beanspruchung der Prozessorleistung der bereitstellenden Kommunikationseinrichtung und/oder der die Verbindung zu der die Authentisierungsfunktion bereitstellenden Kommunikationseinrichtung realisierende Kommunikationseinrichtungen erfasst, wobei als Kriterium das Minimum des Maßes an Beanspruchung geprüft wird, so findet der erfindungsgemäße Vorteil der Verteilung der Last zur effizienteren und im Ergebnis auch schnelleren Abwicklung weitere Unterstützung.

Erfolgt im Falle der Übereinstimmung der Prüfungsergebnisse die Vergabe der zu vergebenden Authenticator-Rolle auf Grundlage eines Vergleichs der Media Access Control "MAC-"Adressen der ersten und zweiten Kommunikationseinrichtung, so ist eine Rückfallposition gegeben, so dass auch in einem solchen Fall das System einen definierten Zustand einnehmen kann.

Vorzugsweise wird dabei derjenigen der ersten und zweiten Kommunikationseinrichtung die Rolle des Authenticators zugeordnet, deren MAC-Adresse kleiner ist.

Gemäß einer weiteren Weiterbildung der Erfindung wird für den Fall, dass die erste und zweite Kommunikationseinrichtung Verbindungen zu mehreren eine Authentisierungsfunktion bereitstellenden Kommunikationseinrichtungen (AAA-S, MKD) aufweisen,
a) eine Schnittmenge von eine Authentisierungsfunktion bereitstellenden Kommunikationseinrichtungen (AAA-S, MKD) gebildet, die diejenigen eine Authentisierungsfunktion bereitstellenden Kommunikationseinrichtungen enthält, zu denen die erste und zweite Kommunikationseinrichtung jeweils beide eine Verbindung aufweisen,
b) im Falle, dass die Schnittmenge zumindest eine erste und eine zweite eine Authentisierungsfunktion bereitstellende Kommunikationseinrichtungen (AAA-S, MKD) enthält, derjenigen der ersten und zweiten Kommunikationseinrichtungen die Authenticator-Rolle zugewiesen wird, bei der die zumindest eine zur Verbindung korrelierende Eigenschaft das Kriterium am besten erfüllt,
c) im Falle, dass die Schnittmenge eine leere Menge ist, derjenigen der ersten und zweiten Kommunikationseinrichtung die Rolle des Authenticators zugeordnet wird, deren zumindest eine zur Verbindung zu einer die Authentisierungsfunktion bereitstellende Kommunikationseinrichtung korrelierende Eigenschaft das Kriterium am besten erfüllt.

Hierdurch ist die Erfindung auch bei einer so genannten Skalierung anwendbar und gewährleistet des Weiteren für ein solches Szenario eine schnelle Mesh-interne Authentisierung.

Erfolgt auf Grundlage des Überprüfungsergebnisses eine Adaption der Authentisierungsmethode, insbesondere die Auswahl einer gemäß Extensible Authentication Protocol "EAP" definierten Methode, lässt sich die Abwicklung noch feingranularer auf die Gegebenheiten hin optimieren.

Die der Erfindung zugrunde liegende Aufgabe wird auch durch eine Anordnung zum Bereitstellen eines drahtlosen lokalen Netzwerks, welche Mittel zur Durchführung des Verfahrens aufweist, dadurch gelöst, dass es die Realisierung des Verfahrens erlaubt.

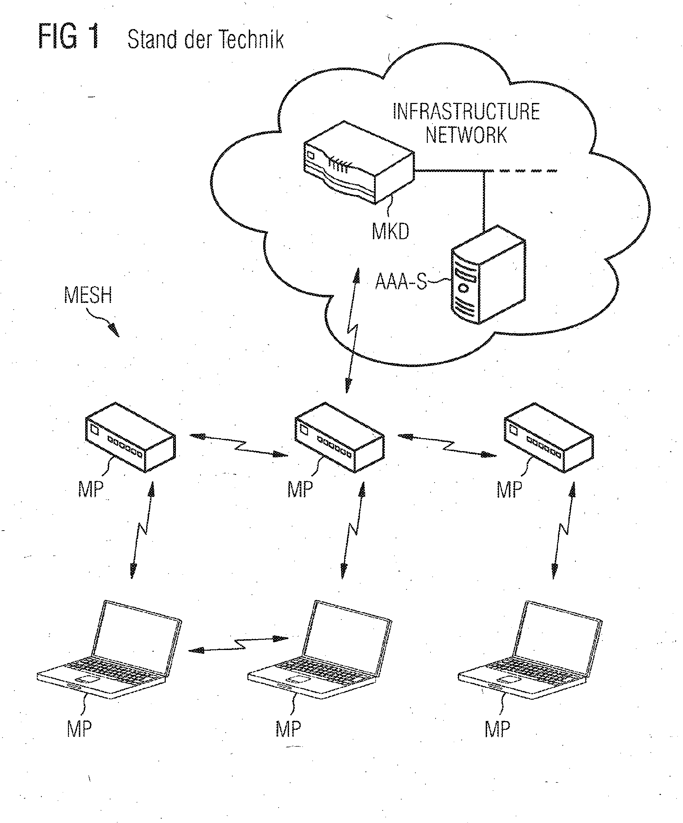

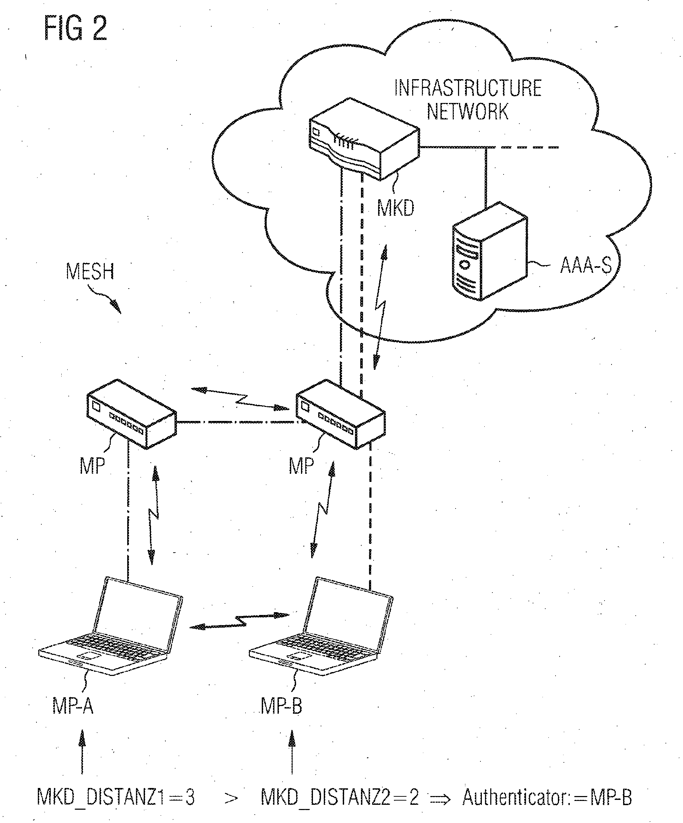

Weitere Einzelheiten der Erfindung sowie Vorteile werden ausgehend von einem in der Figur 1 dargestellten Szenario anhand eines in der Figur 2 dargestellten Ausführungsbeispiels näher erläutert werden. Dabei zeigt
- Figur 1: ein beispielhaftes Mesh-Netzwerk,
- Figur 2: schematisch ein Ausführungsbeispiel der Erfindung in einem die Erfindung realisierenden Mesh-Netzwerk.

In Figur 1 ist, wie oben erläutert, ein Mesh-Netzwerk MESH, welches mit einem Infrastrukturnetzwerk INFRASTRUCTURE NETWORK verbunden ist, dargestellt. Zu erkennen ist, dass es neben Knoten MP auch Infrastrukturknoten wie einen Mesh-Key-Distributor MKD und einen "Authentication, Authorization, Accounting" Authentisierungsserver AAA-S aufweist.

Der Mesh-Key-Distributor MKD ist dabei ein Gateway-Knoten, der das Mesh-Netzwerk MESH mit dem Infrastrukturnetz INFRASTRUCTURE NETWORK koppelt und Schlüsselverteilung regelt. Der Mesh-Key-Distributor MKD ist zudem ein Mesh-Knoten, der aber als Zusatzaufgabe die oben erwähnte Schlüsselverteilung bzw. Gateway-Funktionalität innerhalb des Mesh-Netzwerks MESH übernimmt.

Ferner ist zu erkennen, dass zwischen einigen der dargestellten Knoten MP authentisierte direkte Verbindungen, d.h. Links zwischen den Knoten MP, bestehen (durch den Blitz angedeutet).

Für den Aufbau eines derartigen Links zwischen zwei Knoten MP bedarf es der Authentisierung durch den Authentisierungsserver mit der oben beschriebenen Rollenaufteilung zwischen Authenticator und Supplicant.

Damit einem der Knoten MP die Rolle des Authenticators zugewiesen werden kann, benötigt zumindest einer der Knoten eine Verbindung zu dem AAA-Server AAA-S. Diese Verbindung kann dabei über mehrere Links, d.h. über mehrere der Knoten MP; MKD, führen.

Falls nun nur einer der Mesh-Knoten eine Verbindung zum Authentisierungsserver AAA-S hat und somit als Authenticator agieren kann, ist die Rollenzuteilung eindeutig (falls keiner als Authenticator agieren kann, ist keine Authentifikation möglich).

Falls aber beide Mesh-Knoten in der Lage sind, als Authenticator zu agieren, kommt das erfindungsgemäße Verfahren zum Tragen.

In Figur 2 sind hierzu ein erster Knoten MP-A und eine zweiter Knoten MP-B der Knoten MP als eine direkte Verbindung aufbauende Knoten hervorgehoben.

Dabei ist zu erkennen, dass sowohl der erste Knoten MP-A eine erste Verbindung zum Authentisierungsserver AAA-S aufweist, in der Figur 2 als punktierte Linie angedeutet, als auch der zweite Knoten eine zweite Verbindung zum Authentisierungsserver AAA-S aufweist, welche in der Figur 2 als langgestrichelte Linie angedeutet ist, so dass nun sowohl der erste Knoten MP-A als auch der zweite Knoten MP-B für die Rolle des Authenticators zur Verfügung stehen.

Das Ausführungsbeispiel umfasst den erfindungsgemäßen Kern der Erfindung, der darin besteht, dass ein Mesh-Knoten mithilfe eines "Information Elements" eine Metrik signalisiert, die angibt, wie "gut" die erste Verbindung und/oder zweite Verbindung zu dem für die Authentisierung verwendeten Authentisierungsserver AAA-S, den das Mesh-Netzwerk MESH mit dem Authentisierungsserver AAA-S verbindenden Mesh Key Distributor MKD oder einem anderen für Authentisierungen innerhalb des Mesh-Netzes zuständigen Knoten ist, auf Grund derer die Rolle des Authenticators vergeben wird.

Metrik bezeichnet bekannter Maßen im Allgemeinen ein System von Kennzahlen oder ein Verfahren zur Messung einer quantifizierbaren Größe. Es wird also erfindungsgemäß ein mit der Verbindung zum Authentisierungsserver AAA-S korrelierender Wert ermittelt.

Dieser Wert ist somit ein Maß dafür, wie gut sich der Mesh-Knoten eignet, bei der Authentisierung die Authenticator-Rolle wahrzunehmen (der Authenticator benötigt eine Verbindung zu einem Authentisierungsserver; der Supplicant dagegen kommuniziert über den Authenticator, nicht direkt, mit dem Authentisierungsserver).

Erfindungsgemäß kann es sich dabei bei der Metrik insbesondere um die Anzahl der Hops MKD_DISTANZ1; MKD_DISTANZ2 zu dem Mesh Key-Distribution-Knoten MKD handeln. Auch eine andere Metrik, die aus den Daten des Mesh-Routing-Protokolls bestimmt wird, kann erfindungsgemäß alternativ oder zusätzlich herangezogen werden.

Hierzu kann ferner noch die Auslastung der Links oder die Qualität der den Links zugrunde liegenden Funkverbindung berücksichtigt werden. Weiterbildungen der Erfindung sehen auch vor, dass weitere Daten des Mesh-Knotens in die Metrik einigehen, wie beispielsweise die Art der Stromversorgung (Netzanschluss oder Batterie), auch der Ladezustand der Batterie, die aktuelle Belastung des Knotens ("CPU Load") oder des Netzwerks ("Network Load").

Wie oben erläutert, wird die Entscheidung, welcher der Knoten MP-A; MP-B Authenticator sein soll, anhand der die bessere Verbindung indizierenden Metrik gefällt. D.h. die ermittelten Werte, die entweder selbständig durch Messung erfolgen oder über (Protokoll-)Nachrichten angefordert werden, werden einem Vergleich unterzogen und der im Sinne einer optimalen Verbindungseigenschaft bessere Wert legt den mit der Rolle des Authenticators zu belegenden Knoten MP-A; MP-B fest.

Sind die Werte aber gleich, d.h. besteht die gleiche Metrik, wird erfindungsgemäß die Entscheidung aufgrund eines Vergleichs der MAC-Adressen der beiden Knoten MP-A; MP-B getroffen. Beispielsweise kann der Knoten mit der kleineren MAC-Adresse als Authenticator bestimmt werden oder umgekehrt. Das Gleiche kann erfolgen, falls die Metrik für einen oder beide Knoten nicht ermittelt werden kann.

Ergänzen kann, falls der dann mit der Supplicant belegte Knoten mehrere Authentisierungsmöglichkeiten (EAP-Methoden) unterstützt, anhand der Metrik des Authenticators (und eigener Information wie beispielsweise den Batterie-Ladezustand) eine angepasste EAP-Methode für die Authentisierung auswählen: So kann bei einer schlechten Metrik eine effiziente EAP-Methode ausgewählt werden, bei der nur wenige Nachrichten zwischen Supplicant und Authentisierungsserver AAA-S ausgetauscht werden bzw. die nur einen geringen Stromverbrauch hat (z.B. da sie nur einfache kryptographische Operationen verwendet, also beispielsweise nur Secret-Key-basiert statt Public-Key-basiert).

Neben der Auswahl der gemäß Extensible Authentication Protocol "EAP" definierten Methode könnte auch eine Option innerhalb einer solchen Methode ausgewählt werden.

Beispiele dafür sind, z.B. innerhalb des EAP-TLS:
- die verwendete Ciphersuite (z.B. AES oder DES-Verschlüsselung),
- das verwendete Credential (z.B. kurzer oder langer Schlüssel / Zertifikat (1024 Bit RSA Key oder 2048 bit RSA key; Schlüssel/Zertifikat für RSA oder für ECC -> bei elliptische Kurven ECC sind die Schlüssel kleiner als bei vergleichbar starkem RSA).

Dies stellt nur einen Teil der Optionen innerhalb von EAP Methoden dar. Erfindungsgemäß kann zur Anpassung und Optimierung im Grunde jede der möglichen Optionen von der erfindungsgemäßen Metrikauswertung abhängig gemacht werden.

Das Ausführungsbeispiel zeigt zwar nur einen Mesh-Key-Distributor MKD bzw. einen hierüber erreichbaren Authentisierungsserver AAA-S, die Erfindung bietet aber auch Lösungen für Netzwerke, bei denen in einem Netzwerk mehrere Authentisierungsserver AAA-S respektive Mesh-Key-Distributoren MKD vorhanden sind (Skalierung).

Für diesen Fall wird erfindungsgemäß je Mesh-Knoten nicht nur eine Metrik für einen von ihm erreichbaren Authentisierungsserver AAA-S bzw. einen Mesh-Key-Distributor MKD angegeben, sondern für mehrere in der Regel alle vom jeweiligen Knoten erreichbaren für die Authentisierung zuständigen Knoten AAA-S; MKD.

Der erfindungsgemäße Ablauf für so einen Fall ist dergestalt, dass zuerst ein Vergleich erfolgt der den beiden Mesh-Knoten MP-A; MP-B bekannten für die Authentisierungsfunktion vorgesehenen Knoten AAA-S; MKD.

Zur Identifizierung der für die Authentisierungsfunktion vorgesehenen Knoten MKD, AAA-S und eindeutigen Zuordnung der jeweiligen ermittelten Metriken zu ihnen können dabei die so genannten MKD-Identifier bzw. die MAC-Adressen der für die Authentisierungsfunktion vorgesehenen Knoten herangezogen werden.

Dazu vergleicht jeder der beiden Mesh-Knoten MP-A; MP-B die ihm bekannten für die Authentisierungsfunktion vorgesehenen Knoten AAA-S; MKD mit denen des jeweils anderen Mesh-Knotens MP-A; MP-B. Hierzu können die jeweiligen für die Authentisierungsfunktion vorgesehenen Knoten vorher gegenseitig in einer Nachricht, insbesondere als so genanntes "Announcement" ausgestaltet, bekannt gemacht werden.

Ein Vorteil dieser erfindungsgemäßen Verfahrensweise liegt darin, dass im Falle des Vorliegens einer Übereinstimmung eine schnelle, Meshnetz-interne Authentisierung möglich wird.

Erfindungsgemäß wird deshalb aus den gemeldeten für die Authentisierungsfunktion vorgesehenen Knoten AAA-S; MKD eine Schnittmenge gebildet, die die von den beiden Mesh-Knoten übereinstimmend bekannt gemachten für die Authentisierungsfunktion vorgesehenen Knoten AAA-S; MKD enthält.

Aus dieser Schnittmenge wird dann dem erfindungsgemäßen Kerngedanken folgend derjenige aus den für die Authentisierungsfunktion vorgesehenen Knoten AAA-S; MKD ausgewählt, der die beste Metrik aufweist und die Rolle des Authenticators wird demjenigen Knoten MP-A; MP-B zugeteilt, für dessen Verbindung zu dem ausgewählten die Authentisierungsfunktion bereitstellenden Knoten AAA-S; MKD diese Metrik ermittelt wurde.

Die Erfindung berücksichtigt auch den Fall, dass kein gemeinsamer für die Authentisierungsfunktion vorgesehener Knoten AAA-S; MKD existiert, d.h. die Schnittmenge leer ist. Für diesen Fall wird demnach derjenige der für die Authentisierungsfunktion vorgesehenen Knoten AAA-S; MKD mit der besten Metrik unter allen bekannt gemachten AAA-S; MKD ausgewählt, wobei wiederum derjenige Knoten MP-A; MP-B Authenticator wird, für dessen Verbindung zu dem ausgewählten die Authentisierungsfunktion bereitstellenden Knoten AAA-S; MKD diese Metrik ermittelt wurde.

Ein weiter Vorteil ergibt sich dabei dadurch, dass in dem Mesh-Netzwerk bei der Authentisierung weniger Ressourcen verglichen mit dem aus dem Stand der Technik bekannten Verfahren belegt werden, da die Authentisierungs-Nachrichten erfindungsgemäß stets über einen günstigeren Pfad innerhalb des Mesh-Netzes transportiert werden.

Bei dem zu den oben beschriebenen möglichen Varianten zum leichteren Verständnis vergleichsweise einfach gehaltenen Ausführungsbeispiel, welches in der Figur 2 dargestellt ist, ist angenommen, dass der erste Knoten MP-A und der zweite Knoten MP-B in einem ersten Schritt einen Link aufbauen wollen.

In einem zweiten Schritt signalisieren daraufhin beide Knoten MP-A; MP-B dem jeweils anderen bei dem gewählten Ausführungsbeispiel als Metrik die Distanz MKD_DISTANZ1; MKD_DISTANZ2, d.h. Anzahl der Hops zum Mesh Key Distributor MKD.

In der Zeichnung ist zu erkennen, dass eine erste Metrik MKD_DISTANZ1 für den ersten Knoten MP-A 3 (Hops) beträgt, und für den zweiten Knoten MP-B beträgt eine zweite Metrik MKD_DISTANZ2 2 Hops.

Erfindungsgemäß wird bei dem Ausführungsbeispiel derjenige der beiden Mesh-Knoten MP-A; MP-B mit der besseren Metrik (kleinerer Wert) Authenticator. Dazu werden die Werte der Metrik verglichen, wobei in diesem Beispiel das Kriterium für die Auswahl die kleinere Anzahl von notwendigen Hops ist, so dass gemäß dem Ausführungsbeispiel daher dem zweiten Knoten MP-B die Authenticator-Rolle zugewiesen wird.

## Patentansprüche

1. Verfahren zum Bereitstellen eines drahtlosen lokalen Netzwerks, bei dem stationäre Kommunikationseinrichtungen (AP) sowie mobile Kommunikationseinrichtungen (MP, MP-A, MP-B) nach Art eines Mesh als Subnetzwerk (MESH) verbunden sind, welches an ein Infrastrukturnetzwerk (INFRASTRUKTUR NETWORK) angeschlossen wird, und derart ausgestaltet ist, dass es mit zumindest einer im Infrastrukturnetzwerk (INFRASTRUKTUR NETWORK) angeordneten, eine Authentisierungsfunktion bereitstellende Kommunikationseinrichtung (AAA-S, MKD) Authentisierungsnachrichten austauschen kann und bei einem Versuch des Aufbaus eines ersten Links von einer mit der die Authentisierungsfunktion bereitstellenden Kommunikationseinrichtung eine Verbindung aufweisenden ersten Kommunikationseinrichtung (MP-A) zu einer mit der die Authentisierungsfunktion bereitstellenden Kommunikationseinrichtung eine Verbindung aufweisenden zweiten Kommunikationseinrichtung (MP-B) eine im Rahmen einer Authentisierung zu vergebende Authenticator-Rolle derjenigen der ersten und zweiten Kommunikationseinrichtung zugeordnet wird, bei der zumindest eine zur Verbindung korrelierende Eigenschaft auf die Erfüllung eines Kriteriums geprüft wird, und seitens der ersten und zweiten Kommunikationseinrichtung eine Erfassung der zur Eigenschaft korrelierenden Größe erfolgt,
**dadurch gekennzeichnet, dass** für den Fall, dass die erste und zweite Kommunikationseinrichtung Verbindungen zu mehreren eine Authentisierungsfunktion bereitstellende Kommunikationseinrichtungen (AAA-S, MKD) aufweisen,
a) eine Schnittmenge von eine Authentisierungsfunktion bereitstellende Kommunikationseinrichtungen (AAA-S, MKD) gebildet wird, die diejenigen eine Authentisierungsfunktion bereitstellende Kommunikationseinrichtungen enthält, zu denen die erste und zweite Kommunikationseinrichtung jeweils beide eine Verbindung aufweisen,
b) im Falle, dass die Schnittmenge zumindest eine erste und eine zweite eine Authentisierungsfunktion bereitstellende Kommunikationseinrichtungen (AAA-S, MKD) enthält, derjenigen der ersten und zweiten Kommunikationseinrichtungen die Authenticator-Rolle zugewiesen wird, bei der das Kriterium am besten erfüllt,
c) im Falle, dass die Schnittmenge eine leere Menge ist, derjenigen der ersten und zweiten Kommunikationseinrichtung die Rolle des Authenticators zugeordnet wird, deren zumindest eine zur Verbindung zu einer die Authentisierungsfunktion bereitstellende Kommunikationseinrichtung korrelierende Eigenschaft das Kriterium am besten erfüllt.

2. Verfahren nach dem vorhergehenden Anspruch, **dadurch gekennzeichnet, dass** als korrelierende Größe die Anzahl der Hops zu der die Authentisierungsfunktion bereitstellenden Kommunikationseinrichtung erfasst wird.

3. Verfahren nach einem der vorhergehenden Ansprüche, **dadurch gekennzeichnet, dass** als Kriterium mindestens eine gemäß einem Routing-Protokoll, insbesondere einem Mesh-Routing Protokoll, ermittelbare Größe geprüft wird.

4. Verfahren nach dem vorhergehenden Anspruch, **dadurch gekennzeichnet, dass** als Kriterium das Minimum der Anzahl von Hops geprüft wird.

5. Verfahren nach einem der vorhergehenden Ansprüche, **dadurch gekennzeichnet, dass** als korrelierende Größe eine physikalische Eigenschaft der Verbindung, insbesondere die Funkqualität, erfasst wird, wobei als Kriterium auf ein eine bessere Qualität indizierendes Maß geprüft wird.

6. Verfahren nach einem der vorhergehenden Ansprüche, **dadurch gekennzeichnet, dass** als korrelierende Grosse eine Auslastung der Verbindung zur die Authentisierungsfunktion bereitstellenden Kommunikationseinrichtung und/oder von die Verbindung zur die Authentisierungsfunktion bereitstellenden Kommunikationseinrichtung realisierender Kommunikationseinrichtungen erfasst wird, wobei als Kriterium ein Minimum der Auslastung geprüft wird.

7. Verfahren nach einem der vorhergehenden Ansprüche, **dadurch gekennzeichnet, dass** als korrelierende Grosse die Art der Stromversorgung der die Authentisierungsfunktion bereitstellenden Kommunikationseinrichtung und/oder von der die Verbindung zur die Authentisierungsfunktion bereitstellenden Kommunikationseinrichtung realisierende Kommunikationseinrichtungen erfasst wird, wobei als Kriterium auf Netzstromversorgung geprüft wird.

8. Verfahren nach einem der vorhergehenden Ansprüche, **dadurch gekennzeichnet, dass** als korrelierende Grosse die Beanspruchung von Prozessorleistung der bereitstellenden Kommunikationseinrichtung und/oder von die Verbindung zur die Authentisierungsfunktion bereitstellenden Kommunikationseinrichtung realisierender Kommunikationseinrichtungen erfasst wird, wobei als Kriterium das Minimum des Maßes an Beanspruchung geprüft wird.

9. Verfahren nach einem der vorhergehenden Ansprüche, **dadurch gekennzeichnet, dass** im Falle der Übereinstimmung der Prüfungsergebnisse, die zu vergebende Authenticator-Rolle auf Grundlage eines Vergleichs der Media Access Control "MAC"-Adressen der ersten und zweiten Kommunikationseinrichtung erfolgt.

10. Verfahren nach einem der vorhergehenden Ansprüche, **dadurch gekennzeichnet, dass** im Falle der Nichtermittelbarkeit des Prüfungsergebnisses, die zu vergebende Authenticator-Rolle auf Grundlage eines Vergleichs der Media Access Control "MAC"-Adressen der ersten und zweiten Kommunikationseinrichtung erfolgt.

11. Verfahren nach einem der beiden vorhergehenden Ansprüche, **dadurch gekennzeichnet, dass** derjenigen der ersten und zweiten Kommunikationseinrichtung die Rolle des Authenticators zugeordnet wird, deren MAC-Adresse kleiner ist.

12. Verfahren nach einem der vorhergehenden Ansprüche, **dadurch gekennzeichnet, dass** auf Grundlage des Überprüfungsergebnisses eine Adaption der Authentisierungsmethode, insbesondere die Auswahl einer gemäß Extensible Authentication Protocol "EAP" definierten Methode, erfolgt.

13. Anordnung zum Bereitstellen eines drahtlosen lokalen Netzwerks, umfassend Mittel zur Durchführung des Verfahrens nach einem der vorhergehenden Ansprüche.

## Claims

1. Method for providing a wireless local network, wherein stationary communication devices (AP) and mobile communication devices (MP, MP-A, MP-B) are connected in the manner of a mesh as a sub-network (MESH) which is connected to an infrastructure network (INFRASTRUKTUR NETWORK) and configured such that it can exchange authentication messages with at least one communication device (AAA-S, MKD) arranged in the infrastructure network (INFRASTRUKTUR NETWORK) and providing an authentication function, and during an attempt to establish a first link from a first communication device (MP-A) connected to the communication device providing the authentication function to a second communication device (MP-B) connected to the communication device providing the authentication function, an authenticator role to be assigned as part of an authentication process is associated with the first and second communication devices, wherein at least one property correlating with the connection is analyzed for meeting a criterion, and by means of the first and second communication devices a value correlating with the property is determined,
**characterized in that** for the case that the first and second communication devices are connected to a multiplicity of communication devices (AAA-S, MKD) providing an authentication function,
a) a part quantity of communication devices (AAA-S, MKD) providing an authentication function is formed which contains those communication devices providing an authentication function to which the first and second communication devices are both connected,
b) in the case that the part quantity contains at least a first and a second communication device (AAA-S, MKD) providing an authentication function, the authenticator role is associated with that of the first and second communication devices which best meets this criterion,
c) in the case that the part quantity is an empty quantity, the authenticator role is associated with that of the first and second communication devices of which at least one property correlating with the connection to a communication device providing the authentication function best meets the criterion.

2. Method according to the preceding claim, **characterized in that** as a correlating value, the number of hops to the communication device providing the authentication function is determined.

3. Method according to any one of the preceding claims, **characterized in that** as a criterion, at least one value is checked which can be determined according to a routing protocol, in particular a mesh routing protocol.

4. Method according to the preceding claim, **characterized in that** as a criterion, the minimum number of hops is analyzed.

5. Method according to any one of the preceding claims, **characterized in that** as a correlating value, a physical property of the connection is detected, in particular the radio quality, wherein as a criterion the presence of a measure indicating a better quality is analyzed.

6. Method according to any one of the preceding claims, **characterized in that** as a correlating value, the degree of utilization of the connection to the communication device providing the authentication function and/or from the communication devices creating the connection to the communication device providing the authentication function is determined, wherein as a criterion a minimum degree of utilization is analyzed.

7. Method according to any one of the preceding claims, **characterized in that** as a correlating value, the type of power supply to the communication device providing the authentication function and/or from the communication devices creating the connection to the communication device providing the authentication function is determined, wherein as a criterion the presence of a network power supply is analyzed.

8. Method according to any one of the preceding claims, **characterized in that** as a correlating value, the load on the processor power of the communication device providing and/or from communication devices creating the connection to the communication device providing the authentication function is determined, wherein as a criterion the minimum extent of load is analyzed.

9. Method according to any one of the preceding claims, **characterized in that** in the case of correspondence of the test results, the authenticator role to be assigned is assigned on the basis of a comparison of the Media Access Control "MAC" addresses of the first and second communication devices.

10. Method according to any one of the preceding claims, **characterized in that** in the case that the test result cannot be determined, the authenticator role to be assigned is assigned on the basis of a comparison of the Media Access Control "MAC" addresses of the first and second communication devices.

11. Method according to one of the two preceding claims, **characterized in that** the authenticator role is associated with that of the first and second communication device whose MAC address is smaller.

12. Method according to any one of the preceding claims, **characterized in that** on the basis of the analysis result, an adaptation is made to the authentication method, in particular the selection of a method defined according to the Extensible Authentication Protocol "EAP".

13. Arrangement for provision of a wireless local network comprising means for implementation of the method according to any one of the preceding claims.

## Revendications

1. Procédé servant à fournir un réseau local sans fil, dans le cadre duquel des dispositifs de communication stationnaires (AP) ainsi que des dispositifs de communication mobiles (MP, MP-A, MP-B) sont reliés en tant que sous-réseau (MESH) à la manière d'un maillage, lequel sous-réseau est raccordé à un réseau d'infrastructure (INFRASTRUKTUR NETWORK) et est configuré de telle manière qu'il peut échanger des informations d'authentification avec au moins un dispositif de communication (AAA-S, MKD) disposé dans le réseau d'infrastructure (INFRASTRUKTUR NETWORK), fournissant une fonction d'authentification et que lors d'une tentative d'établissement d'un premier lien entre un premier dispositif de communication (MP-A) présentant une connexion avec le dispositif de communication fournissant la fonction d'authentification et un deuxième dispositif de communication (MP-B) présentant une connexion avec le dispositif de communication fournissant la fonction d'authentification, un rôle d'authentificateur à attribuer dans le cadre d'une authentification est associé auxdits premiers et deuxième dispositif de communication, rôle dans le cadre duquel on vérifie qu'au moins une caractéristique en corrélation avec la connexion remplit un critère et on détecte la taille en corrélation avec la caractéristique du côté du premier et du deuxième dispositif de communication,
**caractérisé en ce que** si le premier et le deuxième dispositif de communication présentent des connexions avec plusieurs dispositifs de communication (AAA-S, MKD) fournissant une fonction d'authentification,
a) une intersection d'ensemble est formée par des dispositifs de communication (AAA-S, MKD) fournissant une fonction d'authentification, laquelle contient lesdits dispositifs de communication fournissant une fonction d'authentification, avec lesquels le premier et le deuxième dispositif de communication présentent respectivement une connexion,
b) si l'intersection d'ensemble contient au moins un premier dispositif de communication et un deuxième dispositif de communication (AAA-S, MKD) fournissant une fonction d'authentification, le rôle d'authentificateur est attribué auxdits premier et deuxième dispositifs de communication, rôle dans le cadre duquel le critère est le mieux observé,
c) si l'intersection d'ensemble est une quantité vide, le rôle de l'authentificateur est associé auxdits premier et deuxième dispositifs de communication, dont au moins une caractéristique en corrélation avec la connexion à un dispositif de communication fournissant la fonction d'authentification remplit le mieux le critère.

2. Procédé selon la revendication précédente, **caractérisé en ce qu'**on détecte comme grandeur de corrélation le nombre de sauts vers le dispositif de communication fournissant la fonction d'authentification.

3. Procédé selon l'une quelconque des revendications précédentes, **caractérisé en ce qu'**on vérifie comme critère au moins une grandeur pouvant être déterminée selon un protocole de routage, en particulier selon un protocole de routage maillé.

4. Procédé selon la revendication précédente, **caractérisé en ce qu'**on vérifie comme critère le nombre minimum de sauts.

5. Procédé selon l'une quelconque des revendications précédentes, **caractérisé en ce qu'**on détecte comme grandeur de corrélation une caractéristique physique de la connexion, en particulier la qualité radio, une mesure indexant une meilleure qualité étant vérifiée comme critère.

6. Procédé selon l'une quelconque des revendications précédentes, **caractérisé en ce qu'**on détecte comme grandeur de corrélation une capacité de la connexion au dispositif de communication fournissant la fonction d'authentification et/ou des dispositifs de communication réalisant la connexion avec le dispositif de communication fournissant la fonction d'authentification, une capacité minimale étant vérifiée comme critère.

7. Procédé selon l'une quelconque des revendications précédentes, **caractérisé en ce qu'**on détecte comme grandeur de corrélation le type d'alimentation en courant du dispositif de communication fournissant la fonction d'authentification et/ou des dispositifs de communication réalisant la connexion avec le dispositif de communication fournissant la fonction d'authentification, l'alimentation en courant du secteur étant vérifiée comme critère.

8. Procédé selon l'une quelconque des revendications précédentes, **caractérisé en ce qu'**on détecte comme grandeur de corrélation la contrainte de la puissance de processeur du dispositif de communication et/ou des dispositifs de communication réalisant la connexion avec le dispositif de communication fournissant la fonction d'authentification, la mesure minimale en termes de contrainte étant vérifiée comme critère.

9. Procédé selon l'une quelconque des revendications précédentes, **caractérisé en ce qu'**en cas de concordance des résultats de contrôle, le rôle d'authentificateur est attribué sur la base d'une comparaison des adresses MAC (Media Access Control) du premier et du deuxième dispositif de communication.

10. Procédé selon l'une quelconque des revendications précédentes, **caractérisé en ce que** dans le cas de l'impossibilité de déterminer le résultat de contrôle, le rôle d'authentificateur est attribué sur la base d'une comparaison des adresses MAC (Media Access Control) du premier et du deuxième dispositif de communication.

11. Procédé selon l'une quelconque des deux revendications précédentes, **caractérisé en ce que** le rôle d'authentificateur est attribué auxdits premier et deuxième dispositifs de communication, dont l'adresse MAC est plus petite.

12. Procédé selon l'une quelconque des revendications précédentes, **caractérisé en ce que** la méthode d'authentification est adaptée, en particulier **en ce qu'**une méthode définie selon le protocole EAP (Extensible Authentication Protocol) est sélectionnée, sur la base du résultat de la vérification.

13. Ensemble permettant de fournir un réseau local sans fil, comprenant des moyens de mise en oeuvre du procédé selon l'une quelconque des revendications précédentes.
